# FASCICULE DE BREVET EUROPEEN

(11) **EP 4 042 007 B1**
(45) Date de publication et mention de la délivrance du brevet: **01.01.2025**
(21) Numéro de dépôt: 20796633.4
(22) Date de dépôt: 05.10.2020
(51) Int. Cl.: F02C 9/00, G05B 23/02, B64D 45/00

(54) **DISPOSITIF, PROCÉDÉ ET PROGRAMME D'ORDINATEUR DE SUIVI DE MOTEUR D'AÉRONEF**
VORRICHTUNG, VERFAHREN UND COMPUTERPROGRAMM ZUR ÜBERWACHUNG EINES FLUGZEUGTRIEBWERKS
APPARATUS, METHOD AND COMPUTER PROGRAM FOR MONITORING AN AIRCRAFT ENGINE

(30) Priorité: 07.10.2019 FR 1911082
(43) Date de publication de la demande: 17.08.2022
(73) Titulaire: SAFRAN, 75015 Paris (FR)
(72) Inventeur: GULIKERS, Lennart, 77550 MOISSY-CRAMAYEL CEDEX (FR); RAZAKARIVONY, Sébastien Philippe, 77550 MOISSY-CRAMAYEL CEDEX (FR)
(74) Mandataire: Regimbeau
(86) Numéro de dépôt international: PCT/FR2020/051741
(87) Numéro de publication internationale: WO 2021/069824

(56) Documents cités:
- US-A1- 2017 185 937
- US-A1- 2017 352 204
- US-A1- 2018 170 580
- US-B1- 8 600 917

## Description

L'invention concerne un dispositif, un procédé et un programme d'ordinateur pour le suivi temporel de l'état d'au moins un moteur de propulsion d'au moins un aéronef.

Un domaine d'application concerne les aéronefs tels que les avions et les hélicoptères, dont on surveille les moteurs pouvant être des turbomachines.

Le document US 2017/185937A1 concerne un système d'évaluation de données de vol d'un aéronef, un système calculant pour chaque vol des estimations des valeurs de variables obtenues en appliquant un modèle d'apprentissage à des données d'observation acquises.

Le document US 8 600 917 décrit un procédé et un dispositif de surveillance d'usure dans un moteur d'aéronef, ayant un composant de collecte de données de vol du moteur, utilisant un modèle de sortie pour fournir une prédiction d'un paramètre en fonction de valeurs d'autres paramètres, et calculant des résidus, représentant les différences respectives entre chaque mesure du paramètre et chaque prédiction correspondante du paramètre.

Le document US 2017/352204A1 concerne un système de prédiction de défaillances sur un avion, ayant une analyse du comportement courant d'un paramètre de vol pour détecter toute déviation par rapport à un modèle de ce paramètre, ayant été préconstruit dans une phase d'apprentissage préliminaire à partir de séries de données d'apprentissage concernant le paramètre, collectées durant des vols d'un ensemble d'avions.

Le document US 2018/170580A1 concerne un procédé de surveillance d'un avion, prévoyant de calculer par un modèle de régression, une valeur standardisée d'un paramètre endogène en relation avec un paramètre exogène spécifique à l'environnement.

Un problème apparaissant sur les moteurs d'aéronefs, est que la fonction de transfert peut changer au cours du temps localement et que les données disponibles peuvent ne pas couvrir la totalité du domaine de vol.

Dans l'état de la technique, bien souvent le vol ne couvre pas tout le domaine de fonctionnement du moteur, et l'utilisation d'un modèle global et d'une comparaison avec les variables mesurées ne suffit pas pour suivre le moteur.

En effet, si une modification de la fonction de transfert survient dans des zones peu ou pas explorées du domaine de vol, il est alors difficile de l'observer par la comparaison, du fait que les différences sont noyées dans le bruit, ou ne peuvent pas être observées. L'état de la technique consiste en différentes méthodes, que sont le suivi de paramètres de modélisation, le suivi de résidu, ou le suivi de valeurs de variables. Le suivi de paramètres de modélisation n'est pas robuste aux changements de domaine de vol, car les paramètres peuvent changer sans que l'état moteur soit affecté. Les résidus ou bien les valeurs des variables peuvent également être affectés par des changements de l'environnement ou des entrées. Ainsi, les solutions de l'état de la technique ne sont pas robustes aux conditions extérieures. En cas d'absence de données ou de peu de données sur une partie du domaine de vol, il est possible que les résidus ou les paramètres, estimés sur des données trop éloignées, ne permettent pas de détecter le changement de fonction de transfert.

L'invention vise à obtenir un dispositif, un procédé et un programme d'ordinateur pour le suivi temporel de l'état d'au moins un moteur de propulsion d'au moins un aéronef, qui permette de résoudre le problème exposé ci-dessus.

A cet effet, un premier objet de l'invention est un dispositif de suivi temporel de l'état d'au moins un moteur de propulsion d'au moins un aéronef, caractérisé en ce que le dispositif comporte
un module d'acquisition de données de vols du au moins un moteur de propulsion du au moins un aéronef, comportant en association pour chaque vol des valeurs de variables d'entrée du moteur lors du vol, des valeurs de variables d'environnement du moteur lors du vol et des valeurs de variables de sortie du moteur lors du vol,
un module d'apprentissage configuré pour calculer par apprentissage à partir des données de chaque vol un modèle individuel de vol pour le vol, liant les variables d'entrée du moteur, les variables d'environnement du moteur et les variables de sortie du moteur,
un module d'utilisation des modèles individuels de vol, configuré pour calculer, pour chaque vol:
   - des estimations des valeurs des variables de sortie du moteur, qui sont obtenues en appliquant le modèle individuel de vol à des valeurs de référence des variables d'entrée du moteur et à des valeurs de référence des variables d'environnement du moteur, et
   - une erreur associée auxdites estimations des valeurs des variables de sortie du moteur, qui ont générées par le modèle individuel de vol et qui ont été obtenues en appliquant le modèle (fᵢ) individuel de vol (Vᵢ) aux valeurs (E_{R}) de référence des variables (E) d'entrée du moteur (M) et aux valeurs (ENV_{R}) de référence des variables (ENV) d'environnement du moteur (M),
les valeurs de référence appartenant à un ensemble prescrit de données de référence, qui sont identiques pour la pluralité des modèles individuels de vol.

Grâce à l'invention, il n'est pas besoin d'avoir un modèle paramétrique ou un modèle existant global. Si le phénomène à détecter couvre une partie de l'espace des variables qui n'est pas ou peu couverte pendant le vol analysé, il est quand même possible de l'observer grâce à l'application des modèles individuels de vol aux valeurs de référence. L'invention permet ainsi de détecter des changements de la fonction de transfert du moteur surveillé qui n'auraient pas été détectés, et permet également d'éviter les fausses alarmes. L'avantage de l'invention par rapport à l'état de l'art est de pouvoir comparer des vols n'ayant pas la même distribution des variables. L'invention évite de faire une erreur d'interprétation, lorsque l'on compare les modèles dans deux domaines différents. L'invention permet de comparer dans un même domaine.

Suivant un mode de réalisation de l'invention, le dispositif comporte au moins une sortie physique de présentation d'informations à un utilisateur, pour fournir une information de suivi du moteur pour le vol qui est déterminée par le module d'utilisation au moins à partir des estimations de valeurs des variables de sortie du moteur et à partir de l'erreur associée à ces estimations et au modèle individuel de vol.

Suivant un mode de réalisation de l'invention, l'information de suivi du moteur pour le vol est formée par le couple constitué par les estimations des valeurs des variables de sortie du moteur et l'erreur associée aux estimations et au modèle individuel de vol.

Suivant un mode de réalisation de l'invention, l'erreur associée aux estimations et au modèle individuel de vol comprend une distance calculée entre
- les valeurs des variables de sortie du moteur, et
- des estimations des valeurs des variables de sortie du moteur, calculées par le modèle individuel de vol appliqué aux valeurs de variables d'entrée du moteur et aux valeurs de paramètres d'environnement du moteur, associées aux valeurs des variables de sortie du moteur.

Suivant un mode de réalisation de l'invention, l'erreur associée au modèle individuel de vol comprend une distance calculée entre
- les valeurs de référence des variables d'entrée du moteur associées aux valeurs de référence des variables d'environnement du moteur, et
- les valeurs de variables d'entrée du moteur associées aux valeurs des variables d'environnement du moteur du vol.

Suivant un mode de réalisation de l'invention, le module d'apprentissage est configuré pour calculer par apprentissage à partir des données de chaque vol, une estimation d'erreur de modélisation du modèle individuel de vol sur les variables de sortie du moteur,
l'erreur associée au modèle individuel de vol comprenant ladite estimation d'erreur de modélisation du modèle individuel de vol.

Suivant un mode de réalisation de l'invention, au moins certaines des valeurs de référence des variables d'entrée de référence du moteur et/ou des valeurs de référence des variables d'environnement du moteur et/ou des valeurs de référence des variables de sortie du moteur sont prescrites en association les unes aux autres dans l'ensemble prescrit de données de référence.

Suivant un mode de réalisation de l'invention, au moins certaines des valeurs de référence des variables d'entrée de référence du moteur et/ou des valeurs de référence des variables d'environnement du moteur et/ou des valeurs de référence des variables de sortie du moteur sont des données de vol ayant été obtenues par le module d'acquisition pour au moins un vol effectué.

Suivant un mode de réalisation de l'invention, au moins certaines des valeurs de référence des variables d'entrée de référence du moteur et/ou des valeurs de référence des variables d'environnement du moteur et/ou des valeurs de référence des variables de sortie du moteur sont des données de vol simulées pour au moins un vol non effectué.

Un deuxième objet de l'invention est un procédé de suivi temporel de l'état d'au moins un moteur de propulsion d'au moins un aéronef, caractérisé en ce que
on acquiert par un module d'acquisition des données de vols du au moins un moteur de propulsion du au moins un aéronef, comportant en association pour chaque vol des valeurs de variables d'entrée du moteur lors du vol, des valeurs de variables d'environnement du moteur lors du vol et des valeurs de variables de sortie du moteur lors du vol,
on calcule par un module d'apprentissage à partir des données de chaque vol un modèle individuel de vol pour le vol, liant les variables d'entrée du moteur, les variables d'environnement du moteur et les variables de sortie du moteur,
on calcule par un module d'utilisation des modèles individuels de vol, pour chaque vol :
   - des estimations des valeurs des variables de sortie du moteur, qui sont obtenues en appliquant le modèle individuel de vol à des valeurs de référence des variables d'entrée du moteur et à des valeurs de référence des variables d'environnement du moteur, et
   - une erreur associée auxdites estimations des valeurs des variables de sortie du moteur, qui ont été générées par le modèle individuel de vol et qui ont été obtenues en appliquant le modèle (fᵢ) individuel de vol (Vᵢ) aux valeurs (E_{R}) de référence des variables (E) d'entrée du moteur (M) et aux valeurs (ENV_{R}) de référence des variables (ENV) d'environnement du moteur (M),
les valeurs de référence appartenant à un ensemble prescrit de données de référence qui sont identiques pour la pluralité des modèles individuels de vol.

Un deuxième objet de l'invention est un programme d'ordinateur comportant des instructions de code pour la mise en oeuvre du procédé de suivi temporel de l'état d'au moins un moteur de propulsion d'au moins un aéronef tel que décrit ci-dessus, lorsqu'il est mis en oeuvre sur un calculateur de l'aéronef.

L'invention sera mieux comprise à la lecture de la description qui va suivre, donnée uniquement à titre d'exemple non limitatif en référence aux figures des dessins annexés.
[Fig. 1] représente schématiquement une partie d'un dispositif de suivi suivant l'invention.
[Fig. 2] représente schématiquement une partie du dispositif de suivi suivant un mode de réalisation de l'invention.
[Fig. 3] représente un diagramme montrant des sorties d'un modèle calculé par le dispositif de suivi suivant un mode de réalisation de l'invention en ordonnées, en fonction d'entrées du modèle en abscisses.
[Fig. 4] représente un diagramme montrant des sorties d'un modèle calculé par le dispositif de suivi suivant un autre mode de réalisation de l'invention en ordonnées, en fonction d'entrées du modèle en abscisses.
[Fig. 5] représente un diagramme montrant des sorties d'un modèle calculé par le dispositif de suivi suivant un autre mode de réalisation de l'invention en ordonnées, en fonction d'entrées du modèle en abscisses.
[Fig. 6] représente un organigramme d'un procédé de suivi suivant l'invention.

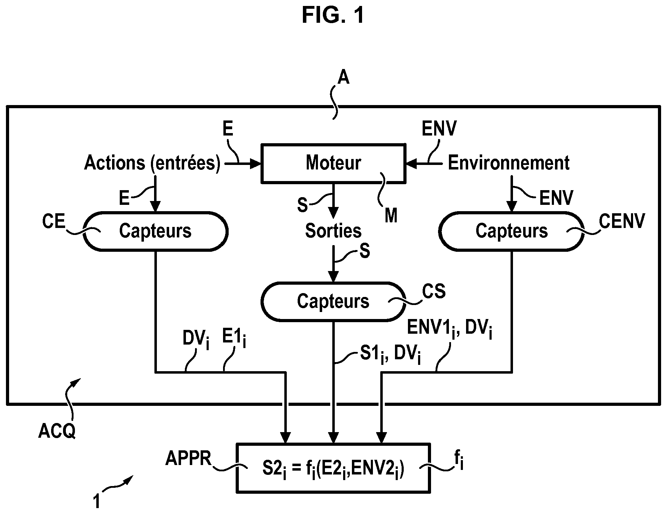

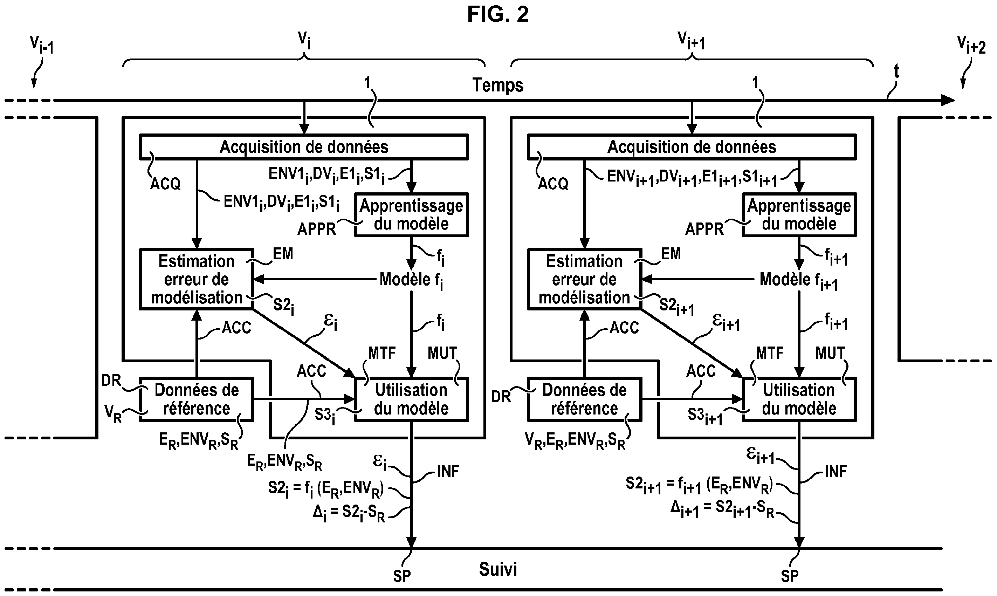

Aux figures 1 et 2, le dispositif 1 de suivi temporel de l'état d'un ou plusieurs moteurs M de propulsion d'un aéronef comporte un module ACQ d'acquisition de données DVᵢ de vols Vᵢ du ou des moteur M. Ces données DVᵢ acquises de vols Vᵢ comportent :
- des valeurs E1ᵢ de variables E d'entrée (grandeurs physiques) du moteur M lors du vol Vᵢ,
- des valeurs ENV1ᵢ de variables ENV (grandeurs physiques) de l'environnement du moteur M lors du vol Vᵢ, et
- des valeurs S1ᵢ de variables S de sortie (grandeurs physiques) du moteur M lors du vol Vᵢ.

Les valeurs E1ᵢ, ENV1ᵢ et S1ᵢ sont acquises pendant le vol Vᵢ et sont associées l'une à l'autre pour chaque vol Vᵢ considéré.

Le module ACQ d' acquisition peut être partiellement ou totalement embarqué sur le ou les moteurs M de l'aéronef ou sur l'aéronef. L'aéronef peut être par exemple un avion ou un hélicoptère. Le moteur M de propulsion de l'aéronef peut être une turbomachine, telle que par exemple un turboréacteur, ou autres. Le module ACQ d'acquisition peut comporter des premiers capteurs CE pour mesurer les valeurs E1ᵢ des variables E d'entrée du moteur lors du vol Vᵢ, et/ou des deuxièmes capteurs CENV pour mesurer les valeurs ENV1ᵢ des variables ENV d'environnement du moteur M lors du vol Vᵢ et/ou des troisièmes capteurs CS pour mesurer les valeurs S1ᵢ des variables S de sortie du moteur M lors du vol Vᵢ.

Les variables E d'entrée du moteur sont des variables de commande sur lesquelles des commandes du pilote de l'aéronef peuvent agir pour commander le moteur. Les variables E d'entrée du moteur peuvent comprendre par exemple une vitesse de rotation du moteur M et/ou une commande du pilote envoyée au moteur M et/ou un couple de commande du moteur M et/ou autres. Les variables ENV d'environnement du moteur M sont des variables extérieures au moteur M et non contrôlables, et peuvent comprendre par exemple une température extérieure et/ou une pression extérieure et/ou un taux d'humidité et/ou une présence de pollution et/ou autres. Les variables S de sortie du moteur M sont des variables résultant des variables E d'entrée et des variables ENV d'environnement et peuvent comprendre par exemple une température du moteur M et/ou un couple de rotation du rotor du moteur M et/ou une consommation instantanée de carburant du moteur M et/ou autres.

Le module ACQ d' acquisition peut par exemple enregistrer dans une mémoire embarquée sur l'aéronef, par exemple dans son calculateur de bord ou dans un boîtier embarqué sur l'aéronef, les données DVᵢ de vols Vᵢ comportant les valeurs E1ᵢ, ENV1ᵢ et S1ᵢ mentionnées ci-dessus. Les données DVᵢ de vols Vᵢ peuvent être extraites de la mémoire au sol après chaque vol Vᵢ pour être envoyées aux autres modules décrits ci-dessous du dispositif 1 de suivi.

Ainsi qu'illustré à la figure 2, le dispositif 1 de suivi comporte un module APPR d'apprentissage permettant de générer pour chaque vol Vᵢ un modèle fᵢ individuel de vol. Le module APPR d'apprentissage permet ainsi de calculer plusieurs modèles fᵢ individuels de vol pour plusieurs vols Vᵢ, Vᵢ₊₁ successifs au cours du temps t. Aux figures 1 et 2, l'indice i se rapporte au vol Vᵢ et donc au temps. Le module APPR d'apprentissage est configuré pour calculer par apprentissage à partir des données DVᵢ, E1ᵢ, ENV1ᵢ et S1ᵢ de chaque vol Vᵢ le modèle fᵢ individuel de vol, liant pour ce vol Vᵢ les variables E d'entrée du moteur M, les variables ENV d'environnement du moteur M et les variables S de sortie du moteur M. Les données DVᵢ, E1ᵢ, ENV1ᵢ et S1ᵢ sont des données d'apprentissage du modèle fᵢ. Le module APPR d'apprentissage de modèle apprend le modèle fᵢ qui lie les entrées E, les variables ENV de vol et les sorties S grâce aux données nouvellement acquises et éventuellement une partie des données passées. La partie des données passées peut être déterminée par une fenêtre glissante dans le temps, ou bien tout autre dispositif pondérant les différentes données des vols précédents.

Suivant un mode de réalisation de l'invention, d'une manière générale pour des deuxièmes valeurs E2ᵢ quelconques des variables E d'entrée du moteur du vol Vᵢ et de deuxièmes valeurs ENV2ᵢ des variables ENV d'environnement, chaque modèle fᵢ individuel de vol V permet de calculer par le module APPR des estimations de valeurs S2ᵢ=fᵢ(E2ᵢ, ENV2ᵢ) des variables S de sortie du moteur du vol Vᵢ en fonction de ces deuxièmes valeurs E2ᵢ et ENV2ᵢ des variables ENV d'environnement du moteur du vol Vᵢ (ou inversement), de telle sorte que, lorsque pour le vol Vᵢ les deuxièmes valeurs E2ᵢ, ENV2ᵢ des variables E d'entrée du moteur et des variables ENV d'environnement du moteur sont égales aux premières valeurs E1ᵢ, ENV1ᵢ des variables E d'entrée du moteur et des variables ENV d'environnement du moteur M, les deuxièmes valeurs S2 des variables S de sortie du moteur M approchent ou sont sensiblement égales aux premières valeurs S1ᵢ des variables S de sortie du moteur M pour le vol Vᵢ . Les premières valeurs E1ᵢ, ENV1ᵢ, Sᵢ des variables E d'entrée de moteur, des variables ENV d'environnement du moteur M et des variables S de sortie du moteur M sont un ensemble de données d'apprentissage du modèle fᵢ individuel de vol. Par exemple, dans ce qui suit, les modèles fᵢ peuvent n'être utilisés que sur les variables de références, ENV_{R} et E_{R}.Le dispositif 1 de suivi comporte un module MUT d'utilisation des modèles fᵢ individuels de vol Vᵢ, ayant été calculés par le module APPR d'apprentissage. Le module MUT d'utilisation est configuré pour calculer, pour chaque vol Vᵢ, les estimations des valeurs S2ᵢ=fᵢ(E_{R}, ENV_{R}) des variables S de sortie du moteur correspondant à des valeurs E_{R} de référence des variables E d'entrée du moteur M et à des valeurs ENV_{R} de référence des variables ENV d'environnement du moteur M. Ces estimations de valeurs S2ᵢ=fᵢ(E_{R}, ENV_{R}) sont donc calculées par le module MUT d'utilisation appliquant le modèle fᵢ individuel de vol Vᵢ aux valeurs E_{R} de référence des variables E d'entrée du moteur M et aux valeurs ENV_{R} de référence des variables ENV d'environnement du moteur M. Les valeurs E_{R}, ENV_{R} de référence appartiennent à un ensemble prescrit de données DR de référence et qui sont identiques pour la pluralité i des modèles fᵢ individuels de vol Vᵢ. Le module MUT d'utilisation comporte un accès ACC permettant de prescrire ou d'entrer les données DR de référence. Le module MUT d'utilisation du modèle fᵢ applique le modèle fᵢ sur un ensemble DR de référence de données (variables ENV_{R} de vol, variables E_{R} d'entrée). Cet ensemble DR de référence peut être des données précédemment stockées, ou des données simulées. Cet ensemble DR fixé de référence peut être un ou plusieurs vols passés, ou un ou plusieurs vols simulés, ou enfin un ou plusieurs points spécifiques de l'espace de validité du modèle appris fᵢ. Le module d'utilisation MUT de modèle comporte comme entrées le modèle fᵢ et les données DR de références et comme sortie des estimations de grandeurs physiques. L'ensemble DR de référence permet de comparer plusieurs modèles fᵢ appris dans des conditions différentes.

Suivant un mode de réalisation de l'invention, le modèle fᵢ individuel de vol Vᵢ utilise un algorithme pouvant être n'importe quel algorithme de régression tel qu'une régression linéaire, ou un processus gaussien, ou une régression à processus gaussien linéaire, ou une forêt aléatoire, ou un réseau de neurones, ou une régression par la méthode des moindres carrés ou une régression polynomiale d'ordre supérieur ou égal à 2, cet algorithme liant les valeurs calculées des variables S de sortie du moteur M aux valeurs des variables E d'entrée du moteur M et aux variables ENV d'environnement du moteur M. Le module MUT estime la fiabilité du modèle, en comparant l'ensemble d'apprentissage et l'ensemble DR de référence, et/ou en utilisant l'erreur d'apprentissage. Dans le premier cas, un exemple possible de réalisation est l'utilisation d'une méthode de régression fournissant une telle estimation, telle que les processus gaussiens ou toute autre méthode probabiliste. Une autre possibilité est d'utiliser la distance entre les deux ensembles, telle que la distance de Chamfer. Pour l'erreur d'apprentissage, il est possible d'utiliser toute technique d'estimation, comme par exemple tester le modèle sur un ensemble de données non utilisés lors de l'apprentissage (cet ensemble est souvent dénommé ensemble de validation dans l'état de l'art).

Suivant un autre mode de réalisation de l'invention, le modèle fᵢ individuel de vol Vᵢ peut lier les valeurs calculées des variables S de sortie du moteur M aux valeurs des variables E d'entrée du moteur M et aux variables ENV d'environnement du moteur M.

Le module MUT d'utilisation est configuré pour également calculer, pour chaque vol Vᵢ, une erreur εᵢ associée aux estimations de valeurs S de sortie calculées par le modèle fᵢ individuel de vol Vᵢ. Cette erreur εᵢ est donc calculée par le module MUT d'utilisation à partir du modèle fᵢ individuel de vol Vᵢ.

L'information INF de suivi décrite ci-dessous ou les estimation de valeurs S2ᵢ=fᵢ(E_{R}, ENV_{R}) des variables S de sortie associées à l'erreur εᵢ permettent à l'utilisateur de surveiller chaque vol Vᵢ l'un après l'autre et de pouvoir observer des dérives ou des phénomènes anormaux du vol Vᵢ. Par exemple, le module MUT d'utilisation est configuré pour surveiller si les deuxièmes valeurs S2ᵢ augmentent puis diminuent entre les vols Vᵢ₋₁, Vᵢ, Vᵢ₊₁ et si l'erreur εᵢ associée reste faible (l'erreur εᵢ associée reste sous un seuil prescrit), pour dans l'affirmative à la fois sur ces deux conditions déclencher automatiquement une alarme sur une ou plusieurs sorties physiques SP de présentation d'informations à un utilisateur (écran d'affichage et/ou autres), cette alarme indiquant qu'il existe un problème sur le moteur M surveillé ou sur l'aéronef ayant ce moteur M surveillé. Le dispositif et le procédé de suivi suivant l'invention peuvent permettre de comparer les différents modèles fᵢ entre eux, en utilisant les modèles fᵢ sur l'ensemble de référence.

Le dispositif 1 de suivi peut comporter une ou plusieurs sorties physiques SP de présentation d'informations à un utilisateur (écran d'affichage et/ou autres), pour fournir l'information INF de suivi du moteur pour le vol Vi. Cette information INF de suivi est déterminée par le module MUT d'utilisation au moins à partir des deuxièmes valeurs S2ᵢ=fᵢ(E_{R}, ENVR) des variables S de sortie du moteur ayant été calculées et à partir de l'erreur εᵢ associée au modèle fᵢ individuel de vol Vi, ayant été calculée. Par exemple, cette information INF est le couple (S2ᵢ, εᵢ). Le dispositif 1 peut comporter un module de suivi automatique de ruptures, tendances et anomalies dans le couple (S2ᵢ, εᵢ), mis en oeuvre par un calculateur et ayant en entrées les estimations de grandeurs physiques et les estimations d'erreurs, et en sorties : une information INF signalant des ruptures et/ou des tendances et/ou des anomalies. En variante, l'utilisateur peut également utiliser une approche visuelle, pour remarquer les tendances, anomalies et ruptures, ou tout algorithme automatique de suivi de séries temporelles, mis en oeuvre par un calculateur. En fonction du résultat de ce suivi, une opération de maintenance ou un conseil d'utilisation du moteur M surveillé peut être émis à destination du client exploitant le moteur M surveillé et/ou l'aéronef.

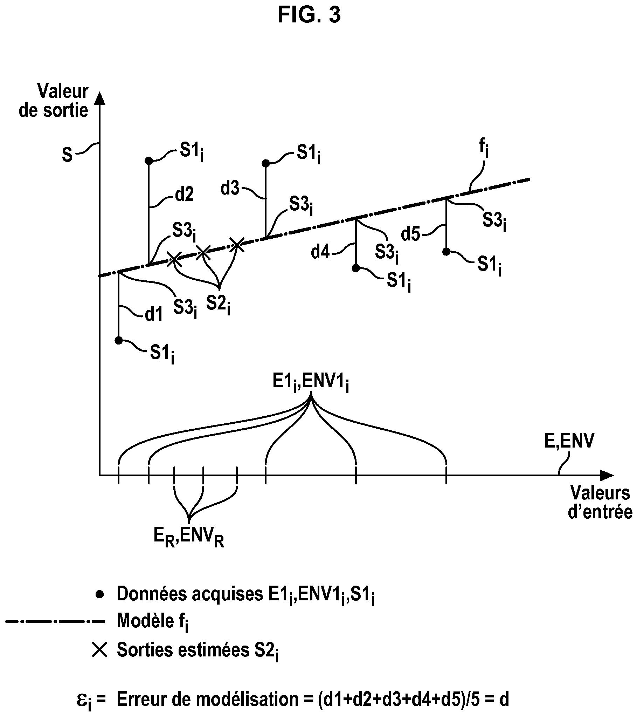

Suivant un mode de réalisation de l'invention, illustré à la figure 3, l'erreur εᵢ comprend ou est une distance d calculée entre :
- les valeurs S1ᵢ des variables S de sortie du moteur M, et
- des estimations de valeurs S3ᵢ des variables S de sortie du moteur M, qui sont calculées en appliquant le modèle fᵢ individuel de vol Vᵢ aux premières valeurs E1ᵢ de variables E d'entrée du moteur et aux premières valeurs ENV1ᵢ de variables ENV d'environnement du moteur M, associées aux premières valeurs S1ᵢ des variables S de sortie du moteur M. Cette distance d peut être calculée comme étant la moyenne des distances individuelles d1, d2, d3, d4, d5 entre chaque première valeur S1ᵢ et chaque troisième valeur S3ᵢ. Par exemple, cette erreur εᵢ peut être calculée en supposant que les premières valeurs ENV1ᵢ des variables ENV d'environnement sont les mêmes pour les différentes valeurs E1ᵢ et S1ᵢ. Par exemple, à la figure 3, le modèle fᵢ individuel de vol Vᵢ peut être une régression linéaire liant les deuxièmes valeurs de sortie S2ᵢ aux premières valeurs E_{R}, ENV_{R} et liant les troisièmes valeurs de sortie S3ᵢ aux premières valeurs E1ᵢ, ENV1ᵢ.

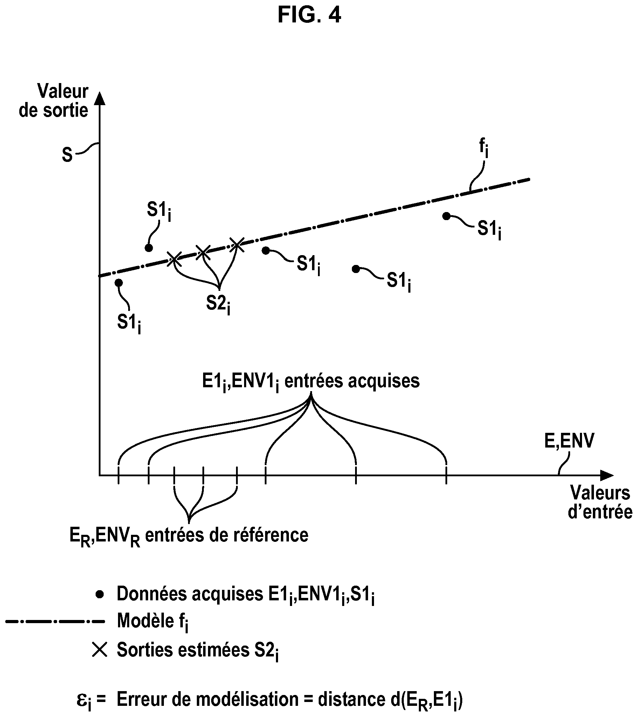

Suivant un mode de réalisation de l'invention, illustré à la figure 4, l'erreur εᵢ associée au modèle fᵢ individuel de vol Vᵢ comprend ou est une distance d(E_{R}, E1ᵢ) calculée entre
- les valeurs E_{R} de référence des variables E d'entrée du moteur M, et
- les premières valeurs E1ᵢ de variables E d'entrée du moteur.

Cette distance d(E_{R}, E1ᵢ) peut être une distance entre des ensembles de points, par exemple une distance de Hausdorff. Par exemple, cette erreur εᵢ peut être calculée en supposant que les premières valeurs ENV1ᵢ des variables ENV d'environnement sont les mêmes pour les différentes valeurs E1ᵢ et S1ᵢ. Par exemple, à la figure 4, le modèle fᵢ individuel de vol Vᵢ peut être une régression linéaire liant les deuxièmes valeurs de sortie S2ᵢ aux premières valeurs E_{R}, ENV_{R} et liant les troisièmes valeurs de sortie S3ᵢ aux premières valeurs E1ᵢ, ENV1ᵢ.

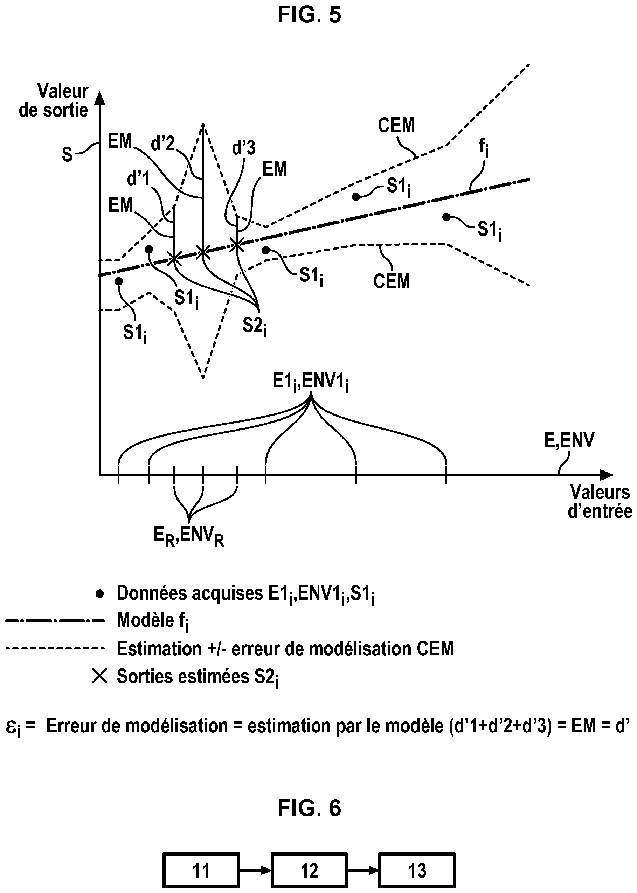

Suivant un mode de réalisation de l'invention, illustré à la figure 5, le module APPR d'apprentissage est configuré pour calculer par apprentissage, à partir des premières données DVᵢ de chaque vol Vᵢ, une estimation EM d'erreur de modélisation du modèle fᵢ individuel de vol sur les variables S de sortie du moteur M.

L'erreur εᵢ associée au modèle fᵢ individuel de vol Vᵢ comprend ou est cette estimation EM d'erreur de modélisation du modèle fᵢ individuel de vol. Le module APPR d'apprentissage peut être configuré pour calculer par apprentissage, à partir des premières données DVᵢ de chaque vol Vᵢ, une estimation EM d'erreur de modélisation du modèle fᵢ individuel de vol sur les variables S de sortie du moteur M, ainsi qu'illustré aux figures 2 et 5. Suivant un mode de réalisation de l'invention, illustré à la figure 5, l'estimation EM d'erreur de modélisation du modèle fᵢ individuel de vol sur les variables S de sortie du moteur M comprend ou est une distance d' calculée entre
- une erreur CEM calculée en fonction des premières valeurs E1ᵢ de variables E d'entrée du moteur et/ou des premières valeurs ENV1ᵢ de variables ENV d'environnement du moteur M, et
- les estimations de valeurs S2ᵢ des variables S de sortie du moteur M, qui sont calculées en appliquant le modèle fᵢ individuel de vol Vᵢ aux valeurs E_{R} de référence des variables E d'entrée du moteur M et aux valeurs ENV_{R} de référence des variables ENV d'environnement du moteur M. Cette distance d' peut être calculée comme étant la moyenne des distances individuelles d'1, d'2, d'3 entre chaque deuxième valeur S2ᵢ et l'erreur. Par exemple, cette estimation EM d'erreur de modélisation peut être calculée en supposant que les premières valeurs ENV1ᵢ des variables ENV d'environnement sont les mêmes pour les différentes valeurs E_{R} et ENV_{R}. Par exemple, à la figure 5, le modèle fᵢ individuel de vol Vᵢ peut être régression à processus gaussien linéaire, liant les deuxièmes valeurs de sortie S2ᵢ aux premières valeurs E_{R}, ENV_{R} et liant les troisièmes valeurs de sortie S3ᵢ aux premières valeurs E1ᵢ, ENV1ᵢ.

Suivant un mode de réalisation de l'invention, au moins certaines (ou toutes) des valeurs E_{R} de référence et/ou au moins certaines (ou toutes) des valeurs ENV_{R} de référence et/ou au moins certaines (ou toutes) des valeurs S_{R} de référence sont prescrites en association les unes aux autres dans l'ensemble prescrit de données DR de référence.

Suivant un mode de réalisation de l'invention, au moins certaines (ou toutes) des valeurs E_{R} de référence et/ou au moins certaines (ou toutes) des valeurs ENV_{R} de référence et/ou au moins certaines (ou toutes) des valeurs S_{R} de référence sont des premières données DV de vol ayant été obtenues par le module ACQ d'acquisition pour au moins un vol Vᵢ effectué. Autrement dit, le ou les vols V_{R} de référence peuvent être un ou des vols Vᵢ effectués.

Suivant un mode de réalisation de l'invention, au moins certaines (ou toutes) des valeurs E_{R} de référence et/ou au moins certaines (ou toutes) des valeurs ENV_{R} de référence et/ou au moins certaines (ou toutes) des valeurs S_{R} de référence sont des premières données DV de vol ayant été simulées pour au moins un vol Vᵢ non effectué réellement par l'aéronef. Autrement dit, le ou les vols V_{R} de référence peuvent être un ou des vols Vᵢ simulés et non effectués réellement par l'aéronef.

Le dispositif 1 de suivi permet de mettre en oeuvre un procédé de suivi temporel de l'état d'au moins un moteur M de propulsion d'au moins un aéronef A, qui comporte les étapes décrites ci-dessous en référence à la figure 6. Ces étapes sont exécutées automatiquement par le dispositif 1 de suivi.

Au cours d'une première étape 11, on acquiert par le module ACQ d'acquisition les données DVᵢ décrites ci-dessus.

Au cours d'une deuxième étape 12 postérieure à la première étape 11, on calcule par le module APPR d'apprentissage le modèle fᵢ individuel de vol décrit ci-dessus.

Au cours d'une troisième étape 13 postérieure à la deuxième étape 12 ou simultanée à la deuxième étape 12, on calcule par le module MUT d'utilisation des modèles fᵢ individuels de vol Vᵢ pour chaque vol Vᵢ les deuxièmes valeurs S2ᵢ=fᵢ(E_{R}, ENV_{R}) et l'erreur εᵢ associée à S2i et au modèle (fᵢ) individuel de vol Vᵢ, ainsi que décrit ci-dessus.

Le procédé de suivi peut mettre en oeuvre l'un et/ou l'autre des modes de réalisation décrits ci-dessus.

Le dispositif 1 de suivi et ses modules APPR, MUT, MTF peuvent être mis en oeuvre par un ou plusieurs calculateurs, tels que par exemple un ou plusieurs ordinateurs, ou autres moyens de calcul. Le dispositif 1 de suivi peut comporter un programme d'ordinateur, enregistré dans une mémoire permanente de celui-ci, pour mettre en oeuvre les modules APPR, MUT, MTF et pour exécuter les étapes du procédé de suivi.

Bien entendu, les modes de réalisation, caractéristiques, possibilités et exemples décrits ci-dessus peuvent être combinés l'un avec l'autre ou être sélectionnés indépendamment l'un de l'autre, dans le cadre défini par les revendications suivantes.

## Revendications

1. Dispositif de suivi temporel de l'état d'au moins un moteur (M) de
propulsion d'au moins un aéronef (A), où le dispositif comporte un module (ACQ) d'acquisition de données (DVᵢ) de vols (Vᵢ) du au moins un moteur (M) de propulsion du au moins un aéronef (A), comportant en association pour chaque vol (Vᵢ) des valeurs (E1ᵢ) de variables (E) d'entrée du moteur lors du vol (Vᵢ), des
valeurs (ENV1ᵢ) de variables (ENV) d'environnement du moteur (M) lors du vol (Vᵢ) et des valeurs (S1ᵢ) de variables (S) de sortie du moteur (M) lors du vol (Vᵢ), un module (APPR) d'apprentissage configuré pour calculer par apprentissage à partir des données (DVᵢ) de chaque vol (Vᵢ) un modèle (fᵢ) individuel de vol pour le vol (Vᵢ), liant les variables (E) d'entrée du moteur (M), les variables (ENV) d'environnement du moteur (M) et les variables (S) de sortie du moteur (M), et **caractérisé par** comporant un module (MUT) d'utilisation des modèles (fᵢ) individuels de vol (Vᵢ), configuré pour calculer, pour chaque vol (Vᵢ) :
des estimations des valeurs (S2ᵢ=fᵢ(E_{R}, ENV_{R})) des variables (S) de sortie du moteur, qui sont obtenues en appliquant le modèle (fᵢ) individuel de vol (Vᵢ) à des valeurs (E_{R}) de référence des variables (E) d'entrée du moteur (M) et à des valeurs (ENV_{R}) de référence des variables (ENV) d'environnement du moteur (M), et une erreur (εᵢ) associée auxdites estimations des valeurs (S2ᵢ=fᵢ(E_{R}, ENV_{R})) des variables de sortie (S) du moteur, qui ont été générées par le modèle (fᵢ) individuel de vol (Vᵢ) et qui ont été obtenues en appliquant le modèle (fᵢ) individuel de vol (Vᵢ) aux valeurs (E_{R}) de référence des variables (E) d'entrée du moteur (M) et aux valeurs (ENV_{R}) de référence des variables (ENV) d'environnement du moteur (M), les valeurs (E_{R}, ENV_{R}, S_{R}) de référence appartenant à un ensemble prescrit de données (DR) de référence, qui sont identiques pour la pluralité (i) des modèles (fᵢ) individuels de vol (Vᵢ).

2. Dispositif suivant la revendication 1, comportant au moins une sortie physique (SP) de présentation d'informations à un utilisateur, pour fournir une information (INF) de suivi du moteur pour le vol (Vᵢ) qui est déterminée par le module (MUT) d'utilisation au moins à partir des estimations de valeurs (S2ᵢ=fᵢ(E_{R}, ENV_{R})) des variables (S) de sortie du moteur et à partir de l'erreur r (εᵢ) associée à ces estimations et au modèle (f;) individuel de vol (Vᵢ).

3. Dispositif suivant la revendication 2, dans lequel l'information (INF) de suivi du moteur pour le vol (Vᵢ) est formée par le couple constitué par les estimations des valeurs (S2ᵢ=fᵢ(E_{R}, ENV_{R})) des variables (S) de sortie du moteur et l'erreur (εᵢ) associée aux estimations et au modèle (f;) individuel de vol (Vᵢ).

4. Dispositif suivant l'une quelconque des revendications précédentes, **caractérisé en ce que** l'erreur (εᵢ) associée aux estimations et au modèle (f;) individuel de vol (Vᵢ) comprend une distance calculée entre les valeurs (S1ᵢ) des variables (S) de sortie du moteur (M), et des estimations des valeurs (S3ᵢ) des variables (S) de sortie du moteur (M), calculées par le modèle (f;) individuel de vol (Vᵢ) appliqué aux valeurs (E1ᵢ) de variables (E) d'entrée du moteur et aux valeurs (ENV1ᵢ) de paramètres (ENV) d'environnement du moteur (M), associées aux valeurs (S1ᵢ) des variables (S) de sortie du moteur (M).

5. Dispositif suivant l'une quelconque des revendications précédentes, **caractérisé en ce que** l'erreur (εᵢ) associée au modèle (f;) individuel de vol (Vᵢ) comprend une distance calculée entre les valeurs (E_{R}) de référence des variables (E) d'entrée du moteur (M) associées aux valeurs (ENV_{R}) de référence des variables (ENV) d'environnement du moteur, et les valeurs (E1ᵢ) de variables (E) d'entrée du moteur associées aux valeurs (ENVᵢ) des variables (ENV) d'environnement du moteur du vol (Vᵢ).

6. Dispositif suivant l'une quelconque des revendications précédentes, **caractérisé en ce que** le module (APPR) d'apprentissage est configuré pour calculer par apprentissage à partir des données (DVᵢ) de chaque vol (Vᵢ), une estimation d'erreur de modélisation du modèle (fᵢ) individuel de vol sur les variables (S) de sortie du moteur (M),
l'erreur (εᵢ) associée au modèle (f;) individuel de vol (Vᵢ) comprenant ladite estimation d'erreur de modélisation du modèle (fᵢ) individuel de vol.

7. Dispositif suivant l'une quelconque des revendications précédentes, **caractérisé en ce qu'**au moins certaines des valeurs (E_{R}) de référence des variables (E) d'entrée de référence du moteur (M) et/ou des valeurs (ENV_{R}) de référence des variables (ENV) d'environnement du moteur (M) et/ou des valeurs (S_{R}) de référence des variables (S) de sortie du moteur (M) sont prescrites en association les unes aux autres dans l'ensemble prescrit de données (DR) de référence.

8. Dispositif suivant l'une quelconque des revendications précédentes, **caractérisé en ce qu'**au moins certaines des valeurs (E_{R}) de référence des variables (E) d'entrée de référence du moteur (M) et/ou des valeurs (ENV_{R}) de référence des variables (ENV) d'environnement du moteur (M) et/ou des valeurs (S_{R}) de référence des variables (S) de sortie du moteur (M) sont des données (DV) de vol ayant été obtenues par le module (ACQ) d'acquisition pour au moins un vol (Vᵢ) effectué.

9. Dispositif suivant l'une quelconque des revendications précédentes, **caractérisé en ce qu'**au moins certaines des valeurs (E_{R}) de référence des variables (E) d'entrée de référence du moteur (M) et/ou des valeurs (ENV_{R}) de référence des variables (ENV) d'environnement du moteur (M) et/ou des valeurs (S_{R}) de référence des variables (S) de sortie du moteur (M) sont des données (DV) de vol simulées pour au moins un vol (Vᵢ) non effectué.

10. Procédé de suivi temporel de l'état d'au moins un moteur (M) de propulsion d'au moins un aéronef (A), où
on acquiert (11) par un module (ACQ) d'acquisition des données (DVᵢ) de vols (Vᵢ) du au moins un moteur (M) de propulsion du au moins un aéronef (A), comportant en association pour chaque vol (Vᵢ) des valeurs (E1ᵢ) de variables (E) d'entrée du moteur lors du vol (Vᵢ), des valeurs (ENV1ᵢ) de variables (ENV) d'environnement du moteur (M) lors du vol (Vᵢ) et des valeurs (S1ᵢ) de variables (S) de sortie du moteur (M) lors du vol (Vᵢ),
on calcule (12) par un module (APPR) d'apprentissage à partir des données (DVᵢ) de chaque vol (Vᵢ) un modèle (fᵢ) individuel de vol pour le vol (Vᵢ), liant les variables (E) d'entrée du moteur (M), les variables (ENV) d'environnement du moteur (M) et les variables (S) de sortie du moteur (M), et **caractérisé en ce qu'**on calcule (13) par un module (MUT) d'utilisation des modèles (fᵢ) individuels de vol (Vᵢ), pour chaque vol (Vᵢ) :
des estimations des valeurs (S2ᵢ=fᵢ(E_{R}, ENV_{R})) des variables (S) de sortie du moteur, qui sont obtenues en appliquant le modèle (f;) individuel de vol (Vᵢ) à des valeurs (E_{R}) de référence des variables (E) d'entrée du moteur (M) et à des valeurs (ENV_{R}) de référence des variables (ENV) d'environnement du moteur (M), et une erreur (εᵢ) associée auxdites estimations des valeurs (S2ᵢ=fᵢ(E_{R}, ENV_{R})) des variables de sortie (S) du moteur, qui ont générées par le modèle (fᵢ) individuel de vol (Vᵢ) et qui ont été obtenues en appliquant le modèle (fᵢ) individuel de vol (Vᵢ) aux valeurs (E_{R}) de référence des variables (E) d'entrée du moteur (M) et aux valeurs (ENV_{R}) de référence des variables (ENV) d'environnement du moteur (M), les valeurs (E_{R}, ENV_{R}, S_{R}) de référence appartenant à un ensemble prescrit de données (DR) de référence qui sont identiques pour la pluralité (i) des modèles (fᵢ) individuels de vol (Vᵢ).

11. Programme d'ordinateur comportant des instructions de code pour la mise en oeuvre du procédé de suivi temporel de l'état d'au moins un moteur (M) de propulsion d'au moins un aéronef suivant la revendication 10, lorsqu'il est mis en oeuvre sur un calculateur de l'aéronef.

## Patentansprüche

1. Vorrichtung zur zeitlichen Überwachung des Zustands mindestens eines Triebwerks (M) zum Antrieb mindestens eines Luftfahrzeugs (A), wobei die Vorrichtung ein Modul (ACQ) zur Erfassung von Daten (DVᵢ) von Flügen (Vᵢ) des mindestens eines Triebwerks (M) zum Antrieb des mindestens einen Luftfahrzeugs (A), die in Verbindung für jeden Flug (Vᵢ) Werte (E1ᵢ) von Eingangsvariablen (E) des Triebwerks während des Fluges (Vᵢ), Werte (ENV1ᵢ) von Umgebungsvariablen (ENV) des Triebwerks (M) während des Fluges (Vᵢ) und Werte (S1ᵢ) von Ausgangsvariablen (S) des Triebwerks (M) während des Fluges (Vᵢ) aufweisen, ein Lernmodul (APPR), das ausgelegt ist, um durch Lernen ausgehend von den Daten (DVᵢ) jedes Fluges (Vᵢ) ein individuelles Flugmodell (fᵢ) für den Flug (Vᵢ) zu berechnen, das die Eingangsvariablen (E) des Triebwerks (M), die Umgebungsvariablen (ENV) des Triebwerks (M) und die Ausgangsvariablen (S) des Triebwerks (M) verbindet, umfasst,
und **gekennzeichnet ist durch** aufweisend ein Modul (MUT) zur Verwendung der individuellen Modelle (fᵢ) des Fluges (Vᵢ), das ausgelegt ist, um für jeden Flug (Vᵢ) zu berechnen:
Schätzungen der Werte (S2ᵢ=fᵢ(E_{R}, ENV_{R})) der Ausgangsvariablen (S) des Triebwerks, die durch Anwendung des individuellen Modells (fᵢ) des Fluges (Vᵢ) auf Referenzwerte (E_{R}) der Eingangsvariablen (E) des Triebwerks (M) und auf Referenzwerte (ENV_{R}) der Umgebungsvariablen (ENV) des Triebwerks (M) erhalten werden, und einen Fehler (εᵢ), der den Schätzungen der der Werte (S2ᵢ=fᵢ(E_{R}, ENV_{R})) der Ausgangsvariablen (S) des Triebwerks zugeordnet ist, die durch das individuelle Modell (fᵢ) des Fluges (Vᵢ) erzeugt wurden und die durch Anwendung des individuellen Modells (fᵢ) des Fluges (Vᵢ) auf die Referenzwerte (E_{R}) der Eingangsvariablen (E) des Triebwerks (M) und auf die Referenzwerte (ENV_{R}) der Umgebungsvariablen (ENV) des Triebwerks (M) erhalten wurden, wobei die Referenzwerte (E_{R}, ENV_{R}, S_{R}) zu einem vorgeschriebenen Satz von Referenzdaten (DR) gehören, die für die Mehrzahl (i) der individuellen Modelle (fᵢ) des Fluges (Vᵢ) identisch sind.

2. Vorrichtung nach Anspruch 1, aufweisend mindestens einen physikalischen Ausgang (SP) zur Darstellung von Informationen für einen Benutzer, um eine Überwachungsinformation (INF) des Triebwerks für den Flug (Vᵢ) bereitzustellen, die durch das Benutzungsmodul (MUT) mindestens ausgehend von den Schätzungen von Werten (S2ᵢ=fᵢ(E_{R}, ENV_{R})) der Ausgangsvariablen (S) des Triebwerks und ausgehend vom Fehler (εᵢ), der diesen Schätzungen und dem individuellen Modell (fᵢ) des Fluges (Vᵢ) zugeordnet ist, bestimmt wird.

3. Vorrichtung nach Anspruch 2, wobei die Überwachungsinformation (INF) des Triebwerks für den Flug (Vᵢ) durch das Paar gebildet wird, das aus den Schätzungen der Werte (S2ᵢ=fᵢ(E_{R}, ENV_{R})) der Ausgangsvariablen (S) des Triebwerks und dem Fehler (εᵢ), der den Schätzungen und dem individuellen Modell (fᵢ) des Fluges (Vi) zugeordnet ist, besteht.

4. Vorrichtung nach einem beliebigen der vorhergehenden Ansprüche, **dadurch gekennzeichnet, dass** der Fehler (εᵢ), der den Schätzungen und dem individuellen Modell (fᵢ) des Fluges (Vᵢ) zugeordnet ist, einen berechneten Abstand umfasst, der zwischen den Werten (S1ᵢ) der Ausgangsvariablen (S) des Triebwerks (M) und Schätzungen der Werte (S3ᵢ) der Ausgangsvariablen (S) des Triebwerks (M) berechnet wurde, die durch das individuelle Modell (fᵢ) des Fluges (Vᵢ) berechnet werden, das auf die Werte (E1ᵢ) der Eingangsvariablen (E) des Triebwerks und auf die Werte (ENV1ᵢ) der Umgebungsparameter (ENV) des Triebwerks (M) angewendet wird, die den Werten (S1ᵢ) der Ausgangsvariablen (S) des Triebwerks (M) zugeordnet sind.

5. Vorrichtung nach einem beliebigen der vorhergehenden Ansprüche, **dadurch gekennzeichnet, dass** der Fehler (εᵢ), der dem individuellen Modell (fᵢ) des Fluges (Vi) zugeordnet ist, einen Abstand umfasst, der zwischen den Referenzwerten (E_{R}) der Eingangsvariablen (E) des Triebwerks (M), die den Referenzwerten (ENV_{R}) der Umgebungsvariablen (ENV) des Triebwerks zugeordnet sind, und den Werten (E1ᵢ) der Eingangsvariablen (E) des Triebwerks, die den Werten (ENVᵢ) der Umgebungsvariablen (ENV) des Triebwerks des Fluges (Vᵢ) zugeordnet sind, berechnet wird.

6. Vorrichtung nach einem beliebigen der vorhergehenden Ansprüche, **dadurch gekennzeichnet, dass** das Lernmodul (APPR) ausgelegt ist, um durch Lernen ausgehend von den Daten (DVᵢ) jedes Fluges (Vᵢ) eine Modellierungsfehlerschätzung des individuellen Flugmodells (fᵢ) auf den Ausgangsvariablen (S) des Triebwerks (M) zu berechnen,
wobei der Fehler (εᵢ), der dem individuellen Modell (fᵢ) des Fluges (Vᵢ) zugeordnet ist, die Modellierungsfehlerschätzung des individuellen Flugmodells (fᵢ) umfasst.

7. Vorrichtung nach einem beliebigen der vorhergehenden Ansprüche, **dadurch gekennzeichnet, dass** mindestens einige der Referenzwerte (E_{R}) der Referenzeingangsvariablen (E) des Triebwerks (M) und/oder der Referenzwerte (ENV_{R}) der Umgebungsvariablen (ENV) des Triebwerks (M) und/oder der Referenzwerte (S_{R}) der Ausgangsvariablen (S) des Triebwerks (M) in Verbindung miteinander in dem vorgeschriebenen Satz von Referenzdaten (DR) vorgeschrieben sind.

8. Vorrichtung nach einem beliebigen der vorhergehenden Ansprüche, **dadurch gekennzeichnet, dass** mindestens einige der Referenzwerte (E_{R}) der Referenzeingangsvariablen (E) des Triebwerks (M) und/oder der Referenzwerte (ENV_{R}) der Umgebungsvariablen (ENV) des Triebwerks (M) und/oder der Referenzwerte (S_{R}) der Ausgangsvariablen (S) des Triebwerks (M) Flugdaten (DV) sind, die von dem Erfassungsmodul (ACQ) für mindestens einen durchgeführten Flug (Vᵢ) erhalten wurden.

9. Vorrichtung nach einem beliebigen der vorhergehenden Ansprüche, **dadurch gekennzeichnet, dass** mindestens einige der Referenzwerte (E_{R}) der Referenzeingangsvariablen (E) des Triebwerks (M) und/oder der Referenzwerte (ENV_{R}) der Umgebungsvariablen (ENV) des Triebwerks (M) und/oder der Referenzwerte (S_{R}) der Ausgangsvariablen (S) des Triebwerks (M) simulierte Flugdaten (DV) für mindestens einen nicht durchgeführten Flug (Vᵢ) sind.

10. Verfahren zur zeitlichen Überwachung des Zustands mindestens eines Triebwerks (M) zum Antrieb mindestens eines Luftfahrzeugs (A), wobei durch ein Erfassungsmodul (ACQ) Daten (DVᵢ) von Flügen (Vᵢ) des mindestens einen Triebwerks (M) zum Antrieb des mindestens einen Luftfahrzeugs (A) erfasst (11) werden, die in Verbindung für jeden Flug (Vᵢ) Werte (E1ᵢ) von Eingangsvariablen (E) des Triebwerks während des Fluges (Vᵢ), Werte (ENV1ᵢ) von Umgebungsvariablen (ENV) des Triebwerks (M) während des Fluges (Vᵢ) und Werte (S1ᵢ) von Ausgangsvariablen (S) des Triebwerks (M) während des Fluges (Vᵢ) aufweisen, durch ein Lernmodul (APPR) ausgehend von den Daten (DVᵢ) jedes Fluges (Vᵢ) ein individuelles Flugmodell (fᵢ) für den Flug (Vᵢ) berechnet (12) wird, das die Eingangsvariablen (E) des Triebwerks (M), die Umgebungsvariablen (ENV) des Triebwerks (M) und die Ausgangsvariablen (S) des Triebwerks (M) verbindet,
und **dadurch gekennzeichnet, dass**
durch ein Modul (MUT) zur Verwendung der individuellen Modelle (fᵢ) des Fluges (Vᵢ) für jeden Flug (Vᵢ) berechnet (13) werden:
Schätzungen der Werte (S2ᵢ=fᵢ(E_{R}, ENV_{R})) der Ausgangsvariablen (S) des Triebwerks, die durch Anwendung des individuellen Modells (fᵢ) des Fluges (Vᵢ) auf Referenzwerte (E_{R}) der Eingangsvariablen (E) des Triebwerks (M) und auf Referenzwerte (ENV_{R}) der Umgebungsvariablen (ENV) des Triebwerks (M), und ein Fehler (εᵢ), der den Schätzungen der Werte (S2ᵢ=fᵢ(E_{R}, ENV_{R})) der Ausgangsvariablen (S) des Triebwerks zugeordnet ist, die durch das individuelle Modell (fᵢ) des Fluges (Vᵢ) erzeugt wurden und die durch Anwendung des individuellen Modells (fᵢ) des Fluges (Vᵢ) auf die Referenzwerte (E_{R}) der Eingangsvariablen (E) des Triebwerks (M) und auf die Referenzwerte (ENV_{R}) der Umgebungsvariablen (ENV) des Triebwerks (M) erhalten wurden, wobei die Referenzwerte (E_{R}, ENV_{R}, S_{R}) zu einem vorgeschriebenen Satz von Referenzdaten (DR) gehören, die für die Mehrzahl (i) der individuellen Modelle (fᵢ) des Fluges (Vᵢ) identisch sind.

11. Rechnerprogramm, das Codeanweisungen zur Ausführung des Verfahrens zur zeitlichen Überwachung des Zustands von mindestens einem Triebwerk (M) zum Antrieb mindestens eines Flugzeugs nach Anspruch 10 aufweist, wenn es auf einem Rechner des Luftfahrzeugs ausgeführt wird.

## Claims

1. A device for monitoring over time a state of at least one propulsion engine (M) of at least one aircraft (A), wherein the device comprises
a module (ACQ) for acquiring data (DVᵢ) of flights (Vᵢ) of the at least one propulsion engine (M) of the at least one aircraft (A), comprising, in association for each flight (Vᵢ), values (E1ᵢ) of input variables (E) of the engine during the flight (Vᵢ), values (ENV1ᵢ) of environment variables (ENV) of the engine (M) during the flight (Vᵢ) and values (S1ᵢ) of output variables (S) of the engine (M) during the flight (Vᵢ),
a learning module (APPR) configured to compute by learning from the data (DVᵢ) of each flight (Vᵢ) an individual flight model (fᵢ) for the flight (Vᵢ), linking the input variables (E) of the engine (M), the environment variables (ENV) of the engine (M) and the output variables (S) of the engine (M),
and **characterized by** comprising
a using module (MUT) for using the individual flight (Vᵢ) models (fi), configured to compute, for each flight (Vᵢ):
estimates of the values (S2ᵢ=fᵢ(E_{R}, ENV_{R})) of the output variables (S) of the engine, which are obtained by applying the individual flight (Vᵢ) model (fᵢ) to reference values (E_{R}) of the input variables (E) of the engine (M) and to reference values (ENV_{R}) of the environment variables (ENV) of the engine (M), and
an error (εᵢ) associated with said estimates of the values (S2ᵢ=fᵢ(E_{R}, ENV_{R})) of the output variables (S) of the engine, which have been generated by the individual flight (Vᵢ) model (fᵢ) and which have been obtained by applying the individual flight (Vᵢ) model (fᵢ) to the reference values (E_{R}) of the input variables (E) of the engine (M) and to the reference values (ENV_{R}) of the environment variables (ENV) of the engine (M),
wherein the reference values (E_{R}, ENV_{R}, S_{R}) belong to a prescribed set of reference data (DR), which are identical for the plurality (i) of individual flight (Vᵢ) models (fᵢ).

2. The device according to claim 1, comprising at least one physical output (SP) for presenting information to a user, to supply an item of engine monitoring information (INF) for the flight (Vᵢ) which is determined by the using module (MUT) at least from the estimates of the values (S2ᵢ=fᵢ(E_{R}, ENV_{R})) of the output variables (S) of the engine and from the error (εᵢ) associated with these estimates and with the individual flight (Vᵢ) model (fᵢ).

3. The device according to claim 2, wherein the item of engine monitoring information (INF) for the flight (Vᵢ) is formed by the pair constituted by the estimates of the values (S2ᵢ=fᵢ(E_{R}, ENV_{R})) of the output variables (S) of the engine and the error (εᵢ) associated with the estimates and with the individual flight (Vᵢ) model (fᵢ).

4. The device according to any one of the preceding claims, **characterized in that** the error (εᵢ) associated with the estimates and with the individual flight (Vᵢ) model (fᵢ) comprises a distance computed between
the values (S1ᵢ) of the output variables (S) of the engine (M) and
estimates of the values (S3ᵢ) of the output variables (S) of the engine (M), computed by the individual flight (Vᵢ) model (fᵢ) applied to the values (E1ᵢ) of the input variables (E) of the engine and to the values (ENV1ᵢ) of the environment parameters (ENV) of the engine (M), associated with the values (S1ᵢ) of the output variables (S) of the engine (M).

5. The device according to any one of the preceding claims, **characterized in that** the error (εᵢ) associated with the individual flight (Vᵢ) model (fᵢ) comprises a distance computed between
the reference values (E_{R}) of the input variables (E) of the engine (M) associated with the reference values (ENV_{R}) of the environment variables (ENV) of the engine and
the values (E1ᵢ) of the input variables (E) of the engine associated with the values (ENVᵢ) of the environment variables (ENV) of the engine of the flight (Vᵢ).

6. The device according to any one of the preceding claims, **characterized in that** the learning module (APPR) is configured to compute, by learning from the data (DVᵢ) of each flight (Vᵢ), an estimate of modeling error of the individual flight model (fᵢ) on the output variables (S) of the engine (M),
wherein the error (εᵢ) associated with the individual flight (Vᵢ) model (fᵢ) comprises said estimate of modeling error of the individual flight model (fᵢ).

7. The device according to any one of the preceding claims, **characterized in that** at least some of the reference values (E_{R}) of the reference input variables (E) of the engine (M) and/or of the reference values (ENV_{R}) of the environment variables (ENV) of the engine (M) and/or of the reference values (S_{R}) of the output variables (S) of the engine (M) are prescribed in association with one another in the prescribed set of reference data (DR).

8. The device according to any one of the preceding claims, **characterized in that** at least some of the reference values (E_{R}) of the reference input variables (E) of the engine (M) and/or of the reference values (ENV_{R}) of the environment variables (ENV) of the engine (M) and/or of the reference values (S_{R}) of the output variables (S) of the engine (M) are flight data (DV) which have been obtained by the acquisition module (ACQ) for at least one flight (Vᵢ) carried out.

9. The device according to any one of the preceding claims, **characterized in that** at least some of the reference values (E_{R}) of the reference input variables (E) of the engine (M) and/or of the reference values (ENV_{R}) of the environment variables (ENV) of the engine (M) and/or of the reference values (S_{R}) of the output variables (S) of the engine (M) are flight data (DV) simulated for at least one flight (Vᵢ) not carried out.

10. A method for monitoring over time a state of at least one propulsion engine (M) of at least one aircraft (A), in which
data (DVᵢ) of flight (Vᵢ) of the at least one propulsion engine (M) of the at least one aircraft (A), comprising, in association for each flight (Vᵢ), values (E1ᵢ) of input variables (E) of the engine during the flight (Vᵢ), values (ENV1ᵢ) of environment variables (ENV) of the engine (M) during the flight (Vᵢ) and values (S1ᵢ) of output variables (S) of the engine (M) during the flight (Vᵢ), are acquired (11) by an acquisition module (ACQ),
an individual flight model (fᵢ) for the flight (Vᵢ), which links the input variables (E) of the engine (M), the environment variables (ENV) of the engine (M) and the output variables (S) of the engine (M), is computed (12) by a learning module (APPR) from the data (DVᵢ) for each flight (Vᵢ),
and **characterized by** the fact that
estimates of the values (S2ᵢ=fᵢ(E_{R}, ENV_{R})) of the output variables (S) of the engine, which are obtained by applying the individual flight (Vᵢ) model (fᵢ) to reference values (E_{R}) of the input variables (E) of the engine (M) and to reference values (ENV_{R}) of the environment variables (ENV) of the engine (M), and an error (εᵢ) associated with said estimates of the values (S2ᵢ=fᵢ(E_{R}, ENV_{R})) of the output variables (S) of the engine, which have been generated by the individual flight (Vᵢ) model (fᵢ) and which have been obtained by applying the individual flight (Vᵢ) model (fᵢ) to the reference values (E_{R}) of the input variables (E) of the engine (M) and to the reference values (ENV_{R}) of the environment variables (ENV) of the engine (M), are computed (13) by a using module (MUT) using the individual flight (Vᵢ) models (fᵢ), for each flight (Vᵢ),
wherein the reference values (E_{R}, ENV_{R}, S_{R}) belong to a prescribed set of reference data (DR) which are identical for the plurality (i) of the individual flight (Vᵢ) models (fᵢ).

11. A computer program comprising code instructions for implementing the method for monitoring over time a state of at least one propulsion engine (M) of at least one aircraft as claimed in claim 10, when it is implemented on a calculator of the aircraft.
